# EUROPEAN PATENT APPLICATION

(11) **EP 4 711 948 A1**
(43) Date of publication of application: **18.03.2026**
(21) Application number: 25201027.7
(22) Date of filing: 09.09.2025
(51) Int. Cl.: G06F 16/27, G06Q 10/06

(54) **INFORMATION PROCESSING APPARATUS, INFORMATION PROCESSING METHOD, AND INFORMATION PROCESSING PROGRAM**

(30) Priority: 13.09.2024 JP 2024159578
(71) Applicant: Yokogawa Electric Corporation, Tokyo 180-8750 (JP)
(72) Inventor: TAKAHASHI, Tomoyuki, Musashino-shi, Tokyo, 180-8750, (JP); YOSHIDA, Yusaku, Musashino-shi, Tokyo, 180-8750, (JP)
(74) Representative: Winter, Brandl - Partnerschaft mbB

(57) **Abstract**

A server apparatus (10) stores therein device setting information that includes tag information that is set in association with a plant device (20) that is included in a plant and a data type code that indicates a data format, receives device data that is transmitted by the plant device (20), determines an output destination of the device data in accordance with the data format based on the tag information, and outputs the device data to the determined output destination based on the data type code.

## Description

### FIELD

The present invention relates to an information processing apparatus, an information processing method, and an information processing program.

### BACKGROUND

In a data processing technology, data that is collected from various kinds of hardware is transmitted as communication data, subjected to various kinds of data processing, such as a data reception process, a data storage process in a database or the like, a data editing process, or a data display process, and notified to an operator via a Personal Computer (PC) screen or the like. Here, a data format that is used in various kinds of data processing and order of the data processing are implementation-dependent in an information processing apparatus, and therefore, a data processing execution part is generated for each of data formats and thereafter all pieces of data are registered in a single database (see, for example, Japanese Laid-open Patent Publication No. 2016-091434).

However, in the data processing technology, it is difficult to reduce a load on an administrator, such as an operator. For example, in a data processing technology of a reference technology, processing order of data processing is determined, and therefore, when a data format or data processing, such as data editing, is to be added, it is needed not only to add a processing function, but also to incorporate execution order of the data processing by implementation. Therefore, in the data processing technology of the reference technology, development that is needed for functionality expansion is largely increased and correction of maintenance becomes difficult.

The present invention has been conceived in view of the foregoing situations, and it is possible to reduce a load on an administrator in the data processing technology.

### SUMMARY

According to an aspect of the embodiments, an information processing apparatus includes a device setting information storage unit that stores therein device setting information that includes tag information that is set in association with a device that is included in a system and a data type code that indicates a data format, a receiving unit that receives device data that is transmitted by the device, a determination unit that determines an output destination of the device data in accordance with the data format based on the tag information, and an output unit that outputs the device data to the determined output destination based on the data type code.

According to an aspect of the embodiments, an information processing method that is implemented by a computer, the information processing method includes receiving device data that is transmitted by a device that is included in a system, determining an output destination of the device data in accordance with a data format based on tag information that is set in association with the device and that is included in device setting information, and outputting the device data to the determined output destination based on a data type code that indicates the data format and that is included in the device setting information.

According to an aspect of the embodiments, an information processing program that causes a computer to execute a process, the process includes receiving device data that is transmitted by a device that is included in a system, determining an output destination of the device data in accordance with a data format based on tag information that is set in association with the device and that is included in device setting information, and outputting the device data to the determined output destination based on a data type code that indicates the data format and that is included in the device setting information.

### BRIEF DESCRIPTION OF THE DRAWINGS

FIG. 1 is a diagram illustrating a configuration example and a process example of a data processing system according to one embodiment;
FIG. 2 is a diagram illustrating a process example of a data processing system according to a reference technology;
FIG. 3 is a diagram illustrating a process example of a data processing system according to one embodiment;
FIG. 4 is a block diagram illustrating a configuration example of each of devices of the data processing system according to one embodiment;
FIG. 5 is a diagram illustrating an example of a device setting information storage unit of a server apparatus according to one embodiment;
FIG. 6 is a diagram illustrating an example of a device data storage unit of the server apparatus according to one embodiment;
FIG. 7 is a diagram illustrating an example of a processing program storage unit of the server apparatus according to one embodiment;
FIG. 8 is a diagram illustrating a specific example 1 of the data processing system according to the reference technology;
FIG. 9 is a diagram illustrating a specific example 2 of the data processing system according to the reference technology;
FIG. 10 is a diagram illustrating a specific example 1 of each of processes performed by the data processing system according to one embodiment;
FIG. 11 is a diagram illustrating a specific example 2-1 of each of processes performed by the data processing system according to one embodiment;
FIG. 12 is a diagram illustrating a specific example 2-2 of each of processes performed by the data processing system according to one embodiment;
FIG. 13 is a diagram illustrating a specific example 3 of each of processes performed by the data processing system according to one embodiment;
FIG. 14 is a diagram illustrating a specific example 4 of each of processes performed by the data processing system according to one embodiment;
FIG. 15 is a diagram illustrating a specific example 5-1 of each of processes performed by the data processing system according to one embodiment;
FIG. 16 is a diagram illustrating a specific example 5-2 of each of processes performed by the data processing system according to one embodiment;
FIG. 17 is a diagram illustrating a specific example 5-3 of each of processes performed by the data processing system according to one embodiment;
FIG. 18 is a sequence diagram illustrating an example of the entire flow of the data processing system according to one embodiment; and
FIG. 19 is a diagram illustrating a hardware configuration example according to one embodiment.

### DETAILED DESCRIPTION OF THE PREFERRED EMBODIMENTS

Embodiments of an information processing apparatus, an information processing method, and an information processing program according to the present invention will be described in detail below with reference to the drawings. Meanwhile, the present invention is not limited by the embodiments described below.

A configuration and processes of a data processing system 100 according to one embodiment, a configuration and processes of each of devices in the data processing system 100, a specific example of the data processing system 100, a flow of each of processes performed by the data processing system 100, and effects of one embodiment will be described below.

### 1. Configuration and processes of data processing system 100

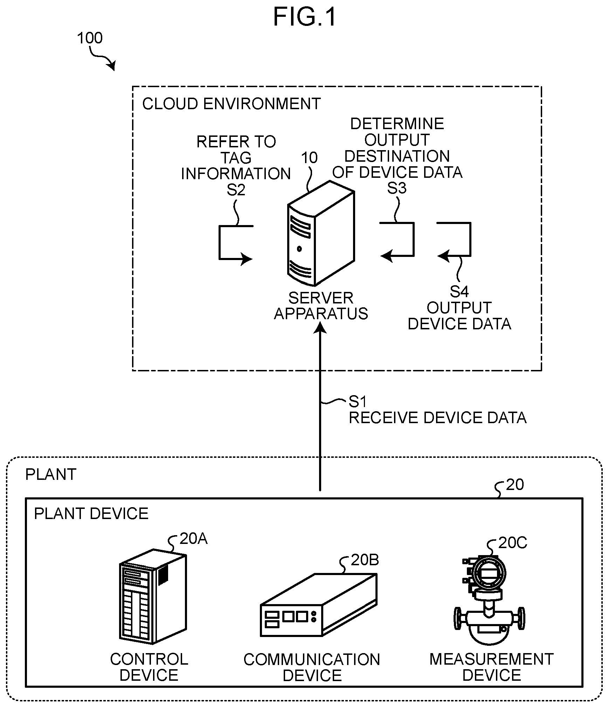

A configuration and processes of the data processing system 100 according to one embodiment will be described below with reference to FIG. 1 to FIG. 3. In the following, a configuration example of the entire data processing system 100, a process example of the data processing system 100, a problem with a data processing system 100-P according to the reference technology, and effects of the data processing system 100 will be described.

Meanwhile, in one embodiment, explanation will be given by using factory production remote monitoring using a plant device 20 that is a device installed in a plant as an example of wide area monitoring, but embodiments do not limit devices and fields of use, and may be applied to environmental measurement and remote monitoring, such as power monitoring, wind power generation, water and sewage monitoring, or river monitoring.

Further, the data processing system 100 may be applied to preventive maintenance, equipment maintenance, or anomaly detection in a general plant, data utilization in a chemical plant, data utilization in a petrochemical plant, a Liquefied Natural Gas (LNG) production facility, data utilization in an LNG terminal, data utilization in food manufacturing or chemical manufacturing, data utilization for a motor or an electric motor, data utilization for engine development test or maintenance, data utilization for boiler management, or the like.

### 1-1. Configuration example of entire data processing system 100

A configuration example of the entire data processing system 100 will be described below with reference to FIG. 1. The data processing system 100 includes a server apparatus 10 and the plant device 20. FIG. 1 is a diagram illustrating a configuration example and a process example of the data processing system 100 according to one embodiment. Here, the server apparatus 10 and the plant device 20 are communicably connected to each other in a wired or wireless manner via a predetermined communication network (not illustrated). Meanwhile, various kinds of communication networks, such as the Internet or a dedicated line, may be adopted as the predetermined communication network.

### 1-1-1. Server apparatus 10

The server apparatus 10 is an apparatus that manages device data that is received from the plant device 20. For example, the server apparatus 10 is constructed in a cloud environment. Meanwhile, the data processing system 100 illustrated in FIG. 1 may include the plurality of server apparatuses 10. Further, while the example in FIG. 1 illustrates a case in which the server apparatus 10 is implemented in the cloud environment, the server apparatus 10 may be implemented in an on-premise environment, an edge environment, or the like.

### 1-1-2. Plant device 20

The plant device 20 is a device that is included in a plant. For example, the plant device 20 is implemented by a control device 20A that controls the plant, a communication device 20B, such as a gateway device, a measurement device 20C, such as a sensor device, or the like.

### 1-1-3. Others

The data processing system 100 may include an operator terminal (not illustrated) that is used by an operator O who manages the plant. Further, the data processing system 100 may include a transmission server apparatus (not illustrated) that collects device data from the plant device 20 and transmits the device data to the server apparatus 10.

### 1-2. Process example of data processing system 100

A process example of the data processing system 100 will be described below with reference to FIG. 1. In the following, a device data reception process, a tag information reference process, an output destination determination process, and a device data output process will be described. Meanwhile, processes from Step S1 to Step S4 below may be performed in a different order. Further, some of the processes from Step S1 to Step S4 below may be omitted.

### 1-2-1. Device data reception process

Firstly, the server apparatus 10 receives device data from the plant device 20 (Step S1). For example, the server apparatus 10 receives device data that is measured by the plant device 20 in a certain data format, such as a JavaScript (registered trademark) Object Notation (JSON) format, a Comma-Separated Values (CSV) format, or an Application Programming Interface (API) integration format. At this time, the server apparatus 10 receives a data type code (DTC) that indicates the data format of the device data, together with the device data.

Here, the data type code is identification information (identifier) on the data, and is a code that includes, for example, the data format (for example, the JSON format, the CSV format, or the API integration format), the number of pieces, graph display information (for example: a range or a unit), or the like of the device data.

### 1-2-2. Tag information reference process

Secondly, the server apparatus 10 refers to stored tag information (Step S2). For example, the server apparatus 10 refers to tag information that is included in device setting information that is stored in a device setting information storage unit 12a.

Here, the tag information is setting information on a determination criterion for the device data, and is, for example, information on a storage area of a storage unit 12 for storage in accordance with the data format of the device data, a processing policy that indicates a type, an execution order, or the number of times of processing programs that are executed in accordance with the data format of the device data, or the like, which is set via the operator terminal of the operator O.

### 1-2-3. Output destination determination process

Thirdly, the server apparatus 10 determines an output destination of the device data (Step S3). For example, the server apparatus 10 determines, as an output destination of the device data corresponding to the data format, a storage area in which the device data is to be stored in a device data storage unit 12b (a measurement data storage unit 12b-1, an error threshold exceeded data storage unit 12b-2, an error code data storage unit 12b-3, and a health check data storage unit 12b-4) based on the tag information that is referred to. Furthermore, the server apparatus 10 determines, as the output destination of the device data corresponding to the data format, a processing program for executing data processing, such as data format conversion, data editing, or data display, based on the tag information that is referred to.

### 1-2-4. Device data output process

Fourthly, the server apparatus 10 outputs the device data (Step S4). For example, the server apparatus 10 identifies the data format that is indicated by the data type code that is received together with the device data, and stores the received device data in the determined storage area for storing the device data in the device data storage unit 12b. Further, the server apparatus 10 identifies the data format that is indicated by the data type code that is received together with the device data, and executes data processing on the received device data by using the determined processing program for executing the data processing. At this time, the server apparatus 10 converts the received device data to data (appropriately referred to as "internal data") of a certain format for internal processing.

### 1-3. Problem with data processing system 100-P

An overview of the data processing system 100-P according to the reference technology will be first described, and thereafter a problem with the data processing system 100-P will be described.

### 1-3-1. Overview of data processing system 100-P

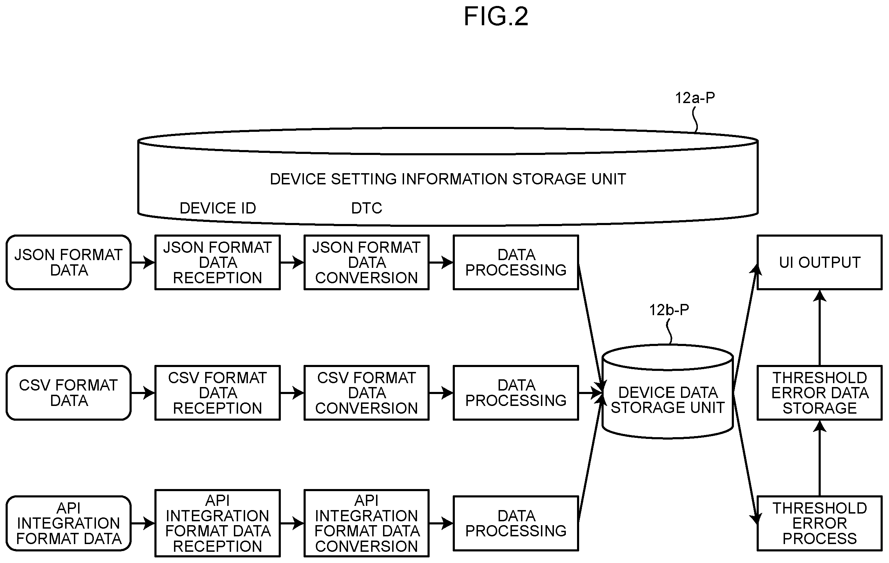

An overview of the data processing system 100-P according to the reference technology will be described below with reference to FIG. 2. FIG. 2 is a diagram illustrating a process example of the data processing system 100-P according to the reference technology. As illustrated in FIG. 2, the data processing system 100-P stores, as the device setting information on the plant device 20 or the like, a device ID that is identification information on the device and the data type code in a device setting information storage unit 12a-P. Further, the data processing system 100-P performs, for example, data reception, data format conversion, and data processing on the device data that is transmitted from the plant device 20, and stores the device data in a device data storage unit 12b-P. At this time, the data processing system 100-P performs data processing corresponding to the data format, such as the JSON format, the CSV format, or the API integration format. Furthermore, the data processing system 100-P performs a threshold error process, threshold error data storage, User Interface (UI) output, or the like by using the device data that is stored in the device data storage unit 12b-P.

### 1-3-2. Problem with data processing system 100-P

A problem with the data processing system 100-P according to the reference technology will be described below. Firstly, in the data processing system 100-P, there is a problem in that the operator O needs to construct a processing program in accordance with a data format, so that large-scale development is needed every time a functionality is expanded and modification of maintenance becomes difficult. Secondly, in the data processing system 100-P, there is another problem in what when a type of the data format or data processing, such as data editing, is to be added, it is needed not only to add a processing function, but also to incorporate a data processing execution order by implementation. At this time, the operator O needs to designate the data processing execution order by a processing program. Further, the operator O needs to check a content of the data and determines a processing program to be designated.

### 1-4. Effects of data processing system 100

An overview of the data processing system 100 according to one embodiment will be first described, and thereafter, effects of the data processing system 100 will be described.

### 1-4-1. Overview of data processing system 100

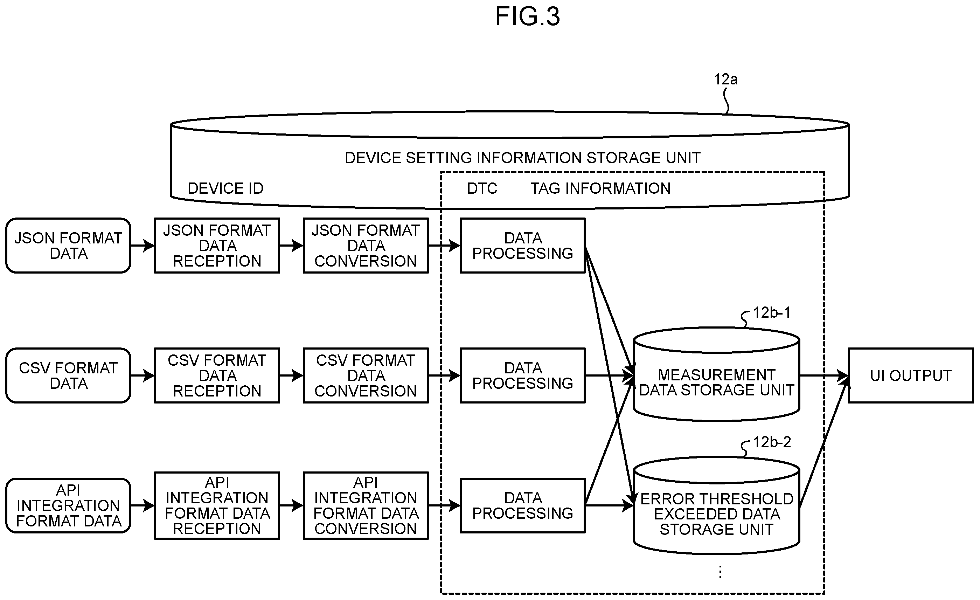

An overview of the data processing system 100 according to one embodiment will be described below with reference to FIG. 3. FIG. 3 is a diagram illustrating a process example of the data processing system 100 according to one embodiment. As illustrated in FIG. 3, the data processing system 100 stores, as the device setting information on the plant device 20 or the like, the device ID that is device identification information on the device, the data type code, and the tag information in the device setting information storage unit 12a. Further, the data processing system 100 refers to, for example, the data type code and the tag information, performs data reception, data format conversion, and data processing on the device data that is transmitted from the plant device 20, and stores the device data in a plurality of storage areas, such as the measurement data storage unit 12b-1 and the error threshold exceeded data storage unit 12b-2 (see a dashed rectangle in FIG. 3). At this time, the data processing system 100 performs data processing in accordance with the data forma, such as the JSON format, the CSV format, or the API integration format. Further, the data processing system 100 performs UI output or the like by using the device data that is stored in the plurality of storage areas, such as the measurement data storage unit 12b-1 and the error threshold exceeded data storage unit 12b-2.

### 1-4-2. Effects of data processing system 100

Effects of the data processing system 100 according to one embodiment will be described below. Firstly, in the data processing system 100, when a content of the data processing is to be changed by input data, it is possible to control the content of the data processing by the tag information or the data type code for which setting is changeable at a later time, so that it is possible to a load on the operator O for functionality expansion and maintenance. Specifically, the operator O is able to change determination on the data processing by the tag information or the data type code that is set at a later time, so that it is not needed to perform development for each data format and it is possible to change maintenance by tag setting. Secondly, in the data processing system 100, it is possible to easily change an order of the processing flow, combinations, or the like with respect to the data processing. Specifically, the operator O is able to change a processing configuration of the server apparatus 10 by external operation, and, by adding an identifier in the device data, it is possible to change data processing in accordance with the processing policy based on the identifier.

Thus, in the data processing technology, the data processing system 100 is able to reduce a load on the operator O who is an administrator.

### 2. Configuration and processes of each of devices in data processing system 100

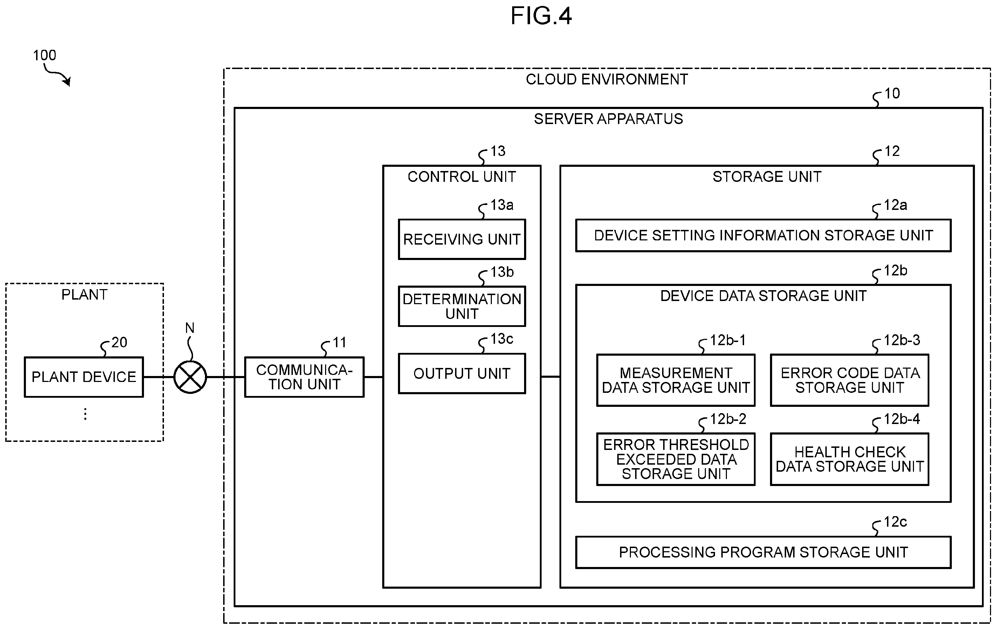

A configuration and processes of the data processing system 100 illustrated in FIG. 1 will be described below with reference to FIG. 4 to FIG. 7. In the following, a configuration example of the entire data processing system 100 according to one embodiment, a configuration example and a process example of the server apparatus 10, and a configuration example and a process example of the plant device 20 will be described.

### 2-1. Configuration example of entire data processing system 100

A configuration example of the entire data processing system 100 illustrated in FIG. 1 will be described below with reference to FIG. 4. FIG. 4 is a block diagram illustrating a configuration example of each of devices in the data processing system 100 according to one embodiment. As illustrated in FIG. 4, the data processing system 100 includes the server apparatus 10 and the plant device 20. Further, the server apparatus 10 and the plant device 20 are communicably connected to each other in a wired or wireless manner via a communication network N that is implemented by the Internet, a dedicated line, or the like.

### 2-2. Configuration example and process example of server apparatus 10

A configuration example and a process example of the server apparatus 10 will be described below with reference to FIG. 4. The server apparatus 10 includes a communication unit 11, the storage unit 12, and a control unit 13. Meanwhile, the server apparatus 10 may include an input unit (for example, a keyboard or a mouse) that receives various kinds of operation from an administrator of the data processing system 100, or a display unit (for example, a liquid crystal display) for displaying various kinds of information.

### 2-2-1. Communication unit 11

The communication unit 11 controls data communication with a different apparatus. For example, the communication unit 11 performs data communication with each of communication apparatuses via a router or the like. Further, the communication unit 11 is able to perform data communication with a terminal (not illustrated).

### 2-2-2. Storage unit 12

The storage unit 12 stores therein various kinds of information that are referred to when the control unit 13 operates, or various kinds of information that are acquired when the control unit 13 operates. The storage unit 12 includes the device setting information storage unit 12a, the device data storage unit 12b (the measurement data storage unit 12b-1, the error threshold exceeded data storage unit 12b-2, the error code data storage unit 12b-3, and the health check data storage unit 12b-4), and a processing program storage unit 12c. Here, the storage unit 12 may be implemented by, for example, a semiconductor memory device, such as a Random Access Memory (RAM) or a flash memory, or a storage device, such as a hard disk or an optical disk. Meanwhile, while the storage unit 12 is arranged inside the server apparatus 10 in the example illustrated in FIG. 4, it may be possible to arrange the storage unit 12 outside the server apparatus 10 or it may be possible to arrange the plurality of storage units 12.

### 2-2-2-1. Device setting information storage unit 12a

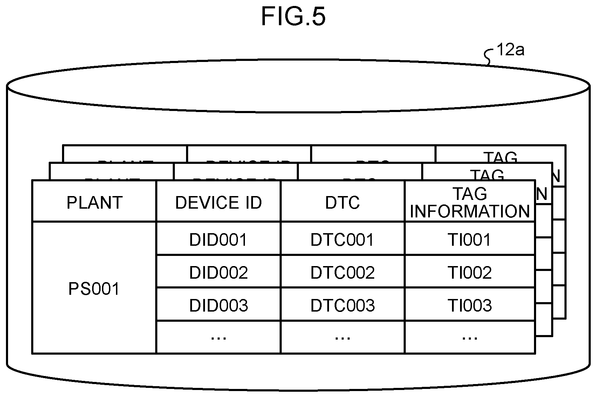

The device setting information storage unit 12a stores therein device setting information. For example, the device setting information storage unit 12a stores therein the device setting information that is input by the operator O who is an administrator of the plant and that is received by a receiving unit 13a of the control unit 13 (to be described later). Further, the device setting information storage unit 12a stores therein tag information that is set in association with a device that is included in the system, and device setting information that includes the data type code that indicates the data format. An example of the data that is stored in the device setting information storage unit 12a will be described below with reference to FIG. 5. FIG. 5 is a diagram illustrating an example of the device setting information storage unit 12a of the server apparatus 10 according to one embodiment. In the example illustrated in FIG. 5, the device setting information storage unit 12a includes items such as a "plant", a "device ID", a "DTC", and "tag information".

The "plant" indicates identification information for identifying a plant that is a system, and is, for example, an identification number or an identification symbol of the plant. The "device ID" indicates identification information for identifying a device that is included in the system, and is, for example, information that includes setting, such as an identifier (ID) or an Internet Protocol (IP) address of hardware, that is uniquely identified and that differs even for the same model. The "DTC" indicates identification information for identifying data, and is, for example, the data format (for example: the JSON format, the CSV format, or the API integration format), the number of pieces, graph display information (for example: a range or a unit), or the like of the device data. The "tag information" is setting information on a determination criterion for data, and is, for example, information on a storage area of the storage unit 12 for storage in accordance with the data format of the device data, a processing policy that indicates a type, an execution order, or the number of times of programs that are executed in accordance with the data format of the device data, or the like.

Specifically, FIG. 5 illustrates an example in which the device setting information storage unit 12a stores therein, with respect to a plant that is identified by "PS001", data with the device setting information of {device ID: "DID001", DTC: "DTC001 ", tag information: "TI001"}, {device ID: "DID002", DTC: "DTC002", tag information: "TI002"}, {device ID: "DID003", DTC: "DTC003", tag information: "TI003"}, ..., or the like.

Meanwhile, the "tag information" is information like a virtual box that allows the operator O to freely add a tag name with respect to a place, a device, or the like. Therefore, by associating the "device ID" or the "DTC" with the tag or by disassociating the "device ID" or the "DTC" from the tag, the operator O is able to change the plant device 20 without changing the tag name or the like.

### 2-2-2-2. Device data storage unit 12b

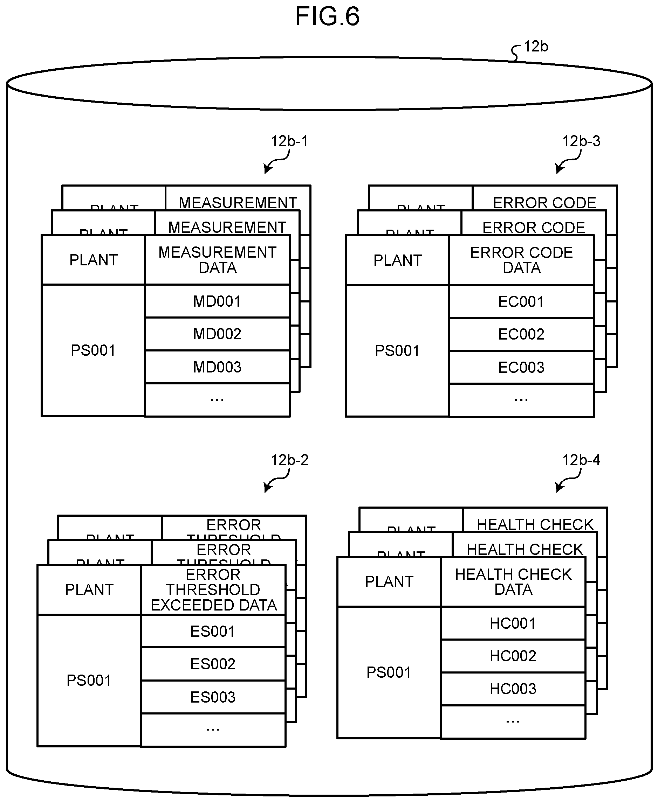

The device data storage unit 12b stores therein the device data. For example, the device data storage unit 12b stores therein the device data that is received by the receiving unit 13a of the control unit 13 (to be described later). Further, the device data storage unit 12b stores therein the device data that is received by an output unit 13c of the control unit 13 (to be described later). Furthermore, the device data storage unit 12b includes the plurality of device data storage units 12b for storing the device data. An example of the data that is stored in the device data storage unit 12b will be described below with reference to FIG. 6. FIG. 6 is a diagram illustrating an example of the device data storage unit 12b of the server apparatus 10 according to one embodiment. In the example illustrated in FIG. 6, the device data storage unit 12b includes storage areas such as the measurement data storage unit 12b-1, the error threshold exceeded data storage unit 12b-2, the error code data storage unit 12b-3, and the health check data storage unit 12b-4.

### Measurement data storage unit 12b-1

The measurement data storage unit 12b-1 stores therein measurement data as the device data. In the example illustrated in FIG. 6, the measurement data storage unit 12b-1 includes items such as a "plant" and "measurement data".

The "plant" indicates identification information for identifying the plant that is the system, and is, for example, an identification number or an identification symbol of the plant. The "measurement data" indicates data that is measured by a device that is included in the system, and is, for example, control data of the plant that is measured by the control device 20A, communication amount data of the plant that is measured by the communication device 20B, sensor data of the plant that is measured by the measurement device 20C, or the like.

Specifically, FIG. 6 illustrates an example in which the measurement data storage unit 12b-1 stores therein, with respect to the plant that is identified by "PS001", measurement data of "MD001", "MD002", "MD003", ..., and the like as the data.

### Error threshold exceeded data storage unit 12b-2

The error threshold exceeded data storage unit 12b-2 stores therein error threshold exceeded data as the device data. In the example illustrated in FIG. 6, the error threshold exceeded data storage unit 12b-2 includes items such as a "plant" and "error threshold exceeded data".

The "plant" indicates identification information for identifying the plant that is the system, and is, for example, an identification number or an identification symbol of the plant. The "error threshold exceeded data" indicates data that has exceeded an error threshold among pieces of data that are measured by a device that is included in the system, and is, for example, control data that has exceeded the error threshold among pieces of control data of the plant that are measured by the control device 20A, communication amount data that has exceeded the error threshold among pieces of the communication amount data of the plant that are measured by the communication device 20B, sensor data that has exceeded the error threshold among pieces of the sensor data of the plant that are measured by the measurement device 20C, or the like.

Specifically, FIG. 6 illustrates an example in which the error threshold exceeded data storage unit 12b-2 stores therein, with respect to the plant that is identified by "PS001", error threshold exceeded data of "ES001", "ES002", "ES003", ..., and the like as the data.

### Error code data storage unit 12b-3

The error code data storage unit 12b-3 stores therein error code data as the device data. In the example illustrated in FIG. 6, the error code data storage unit 12b-3 includes items such as a "plant" and "error code data".

The "plant" indicates identification information for identifying the plant that is the system, and is, for example, an identification number or an identification symbol of the plant. The "error code data" indicates a type of an error that has occurred in the system, and is, for example, control anomaly, communication anomaly, process anomaly, or the like of the plant.

Specifically, FIG. 6 illustrates an example in which the error code data storage unit 12b-3 stores therein, with respect to the plant that is identified by "PS001", error code data of "EC001", "EC002", "EC003", ..., and the like as the data.

### Health check data storage unit 12b-4

The health check data storage unit 12b-4 stores therein health check data as the device data. In the example illustrated in FIG. 6, the health check data storage unit 12b-4 includes items such as a "plant" and "health check data".

The "plant" indicates identification information for identifying the plant that is the system, and is, for example, an identification number or an identification symbol of the plant. The "health check data" indicates an inspection result of the system, and is, for example, a result of regular inspection of the plant, which is output by the control device 20A (for example: a value indicating safety or a report), or the like.

Specifically, FIG. 6 illustrates an example in which the health check data storage unit 12b-4 stores therein, with respect to the plant that is identified by "PS001", health check data of "HC001", "HC002", "HC003", ..., and the like as the data.

### 2-2-2-3. Processing program storage unit 12c

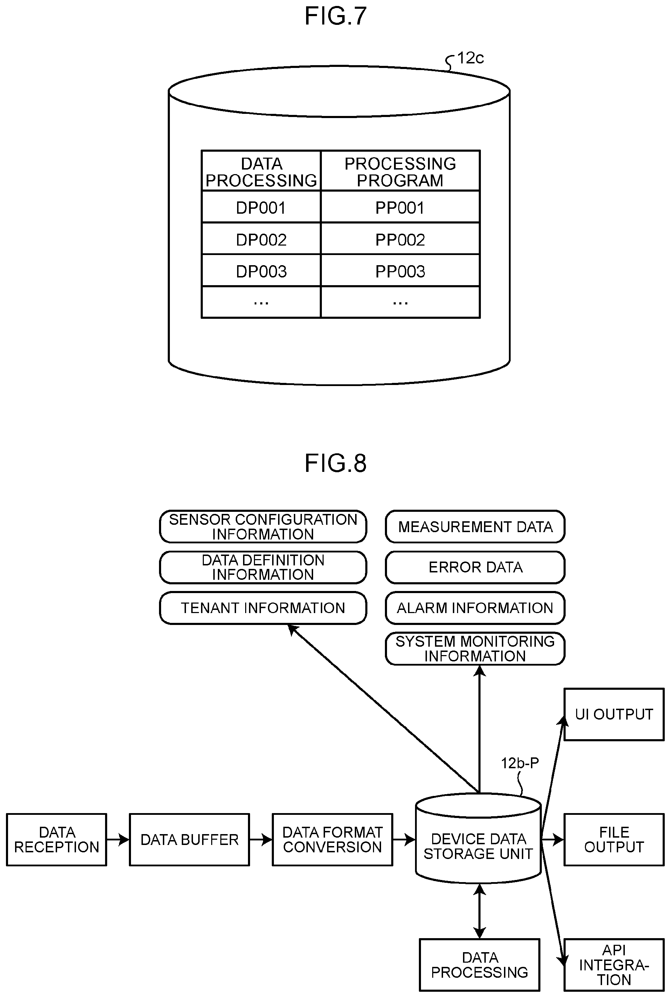

The processing program storage unit 12c stores therein a processing program. For example, the processing program storage unit 12c stores therein a processing program that is used by the output unit 13c of the control unit 13 (to be described later). Further, the processing program storage unit 12c stores therein a plurality of processing programs that enable execution of data processing on the device data. An example of the data that is stored in the processing program storage unit 12c will be described below with reference to FIG. 7. FIG. 7 is a diagram illustrating an example of the processing program storage unit 12c of the server apparatus 10 according to one embodiment. In the example illustrated in FIG. 7, the processing program storage unit 12c includes items such as "data processing" and "processing program".

The "data processing" indicates identification information for identifying data processing that is performed on the data, and is, for example, an identification number or an identification symbol of data processing, such as data reception, data format conversion, data editing, or data display, that is performed on the device data. The "processing program" is software data that enables execution of data processing that is performed on the data, and is execution file data of the data processing, such as data reception, data format conversion, data editing, or data display.

Specifically, FIG. 7 illustrates an example in which the processing program storage unit 12c stores therein processing programs of {data processing: "DP001", processing program: "PP001"}, {data processing: "DP002", processing program: "PP002"}, {data processing: "DP003", processing program: "PP003"}, ..., and the like as the data.

### 2-2-3. Control unit 13

The control unit 13 controls the entire server apparatus 10. The control unit 13 includes the receiving unit 13a, a determination unit 13b, and the output unit 13c. Here, the control unit 13 may be implemented by, for example, an electronic circuit, such as a Central Processing Unit (CPU) or a Micro Processing Unit (MPU), or an integrated circuit, such as an Application Specific Integrated Circuit (ASIC) or a Field Programmable Gate Array (FPGA).

### 2-2-3-1. Receiving unit 13a

The receiving unit 13a receives various kinds of information. Meanwhile, the receiving unit 13a may store various kinds of the received information in the storage unit 12. **In** the following, a device setting information reception process and a device data reception process will be described.

### Device setting information reception process

The receiving unit 13a performs the device setting information reception process. For example, the receiving unit 13a receives the device setting information that is input by a user via a user terminal, and stores the device setting information in the device setting information storage unit 12a.

A tag information reception process will be described below as the device setting information reception process. When the user changes association of the tag information via an input screen that is displayed on the user terminal, the receiving unit 13a updates the device setting information that is stored in the device setting information storage unit 12a. At this time, the receiving unit 13a is able to increase processing programs that are executed on the device data or increase the device data storage unit 12b for storing the device data by receiving addition of the tag information as a change of the association of the tag information. Further, the receiving unit 13a is able to change a processing program that is executed on the device data or change the device data storage unit 12b for storing the device data by receiving correction of the tag information as a change of the association of the tag information. Furthermore, the receiving unit 13a is able to receive both of addition and correction of the tag information as a change of the association of the tag information.

A data type code reception process will be described below as the device setting information reception process. When the user changes the data type code via the input screen that is displayed on the user terminal, the receiving unit 13a updates the device setting information that is stored in the device setting information storage unit 12a. At this time, the receiving unit 13a is able to increase device data that is to be subjected to a processing program or increase the device data that is stored in the device data storage unit 12b by receiving addition of the data type code as a change of the data type code. Further, the receiving unit 13a is able to change the device data that is subjected to the processing program or change the device data that is stored in the device data storage unit 12b by receiving correction of the data type code as a change of the data type code. Furthermore, the receiving unit 13a is able to receive both of addition and correction of the data type code as a change of the data type code.

A specific example of the device setting information reception process will be described below. Firstly, the receiving unit 13a generates, with respect to the plant that is identified by "PS001", a device setting information input screen that includes items such as a "device ID", a "DTC", and "tag information", and displays the device setting information input screen on a display screen of the operator terminal. Secondly, the receiving unit 13a receives {device ID: "DID001", DTC: "DTC001", tag information: "TI001"}, {device ID: "DID002", DTC: "DTC002", tag information: "TI002"}, {device ID: "DID003", DTC: "DTC003", tag information: "TI003"}, ... as the device setting information that the operator O has input in the device setting information input screen of the operator terminal. Thirdly, the receiving unit 13a stores the received device setting information in the device setting information storage unit 12a.

### Device data reception process

The receiving unit 13a performs the device data reception process. For example, the receiving unit 13a receives device data that is transmitted by a device that is included in the system. At this time, the receiving unit 13a receives the device data together with the data type code. Further, the receiving unit 13a receives, as the data format, device data of at least one of the JSON format, the CSV format, and the API integration format.

A specific example of the device data reception process will be described below. Firstly, the receiving unit 13a receives, with respect to the plant that is identified by "PS001", {measurement data: "MD001-J"} of the JSON format and {DTC: "DTC001"} that indicates the JSON format as the data format, which are transmitted by the measurement device 20C. Secondly, the receiving unit 13a receives, with respect to the plant that is identified by "PS001 ", {error threshold exceeded data: "ES001-C", error code data: "EC001-C"} of the CSV format and {DTC: "DTC002"} that indicates the CSV format as the data format, which are transmitted by the control device 20A that constitutes a Programmable Logic Controller (PLC). Thirdly, the receiving unit 13a receives, with respect to the plant that is identified by "PS001 ", {health check data: "HC001-A"} of the API integration format and {DTC: "DTC003"} that indicates the API integration format as the data format, which are transmitted by the control device 20A that is linked in the cloud environment.

### 2-2-3-2. Determination unit 13b

The determination unit 13b performs various kinds of determination. Meanwhile, the determination unit 13b may refer to various kinds of information that are stored in the storage unit 12. In the following, an output destination determination process (a device data storage unit determination process and a processing program determination process) will be described.

### Output destination determination process

The determination unit 13b performs the output destination determination process. For example, a determination unit 15b determines an output destination of the device data in accordance with the data format based on the tag information. Further, the determination unit 13b refers to the tag information that is indicated by the updated device setting information, and determines the output destination of the device data in accordance with the data format.

A specific example of the output destination determination process will be described below. Firstly, the determination unit 13b refers to {plant: "PS001", device ID: "DID001", DTC: "DTC001", tag information: "TI001"}, {plant: "PS001", device ID: "DID002", DTC: "DTC002", tag information: "TI002"}, {plant: "PS001", device ID: "DID003", DTC: "DTC003", tag information: "TI003"}, ... as the device setting information that is stored in the device setting information storage unit 12a. Secondly, the determination unit 13b determines an output destination of the device data of the data format indicated by the data type code of "DTC001" by using the tag information of "TI001" based on the device setting information of {plant: "PS001", device ID: "DID001", DTC: "DTC001", tag information: "TI001"}. Thirdly, the determination unit 13b determines an output destination of the device data of the data format indicated by the data type code of "DTC002" by using the tag information of "TI002 based on the device setting information of {plant: "PS001", device ID: "DID002", DTC: "DTC002", tag information: "TI002"}. Thirdly, the determination unit 13b determines an output destination of the device data of the data format indicated by the data type code of "DTC003" by using the tag information of "TI003" based on the device setting information of {plant: "PS001", device ID: "DID003", DTC: "DTC003 ", tag information: "TI003"}.

### Device data storage unit determination process

The determination unit 13b performs the device data storage unit determination process as the output destination determination process. For example, the determination unit 13b determines, as the output destination of the device data that is indicated by the tag information, the device data storage unit 12b for storing the received device data from among the plurality of device data storage units 12b. At this time, the determination unit 13b determines, from among the plurality of device data storage units 12b, the device data storage unit 12b for storing at least one of measurement data that is collected by a device, error threshold exceeded data that indicates measurement data that has exceeded the error threshold of the system, error code data that indicates a type of an error that has occurred in the system, and health check data that indicates an inspection result of the system.

A specific example of the device data storage unit determination process will be described below. Firstly, the determination unit 13b determines the measurement data storage unit 12b-1 as an output destination by using the tag information "TI001" with respect to the device data of the data format indicated by the data type code of "DTC001". Secondly, the determination unit 13b determines the error threshold exceeded data storage unit 12b-2 and the error code data storage unit 12b-3 as output destinations by using the tag information "TI002" with respect to the device data of the data format indicated by the data type code of "DTC002". Thirdly, the determination unit 13b determines the health check data storage unit 12b-4 as an output destination by using the tag information "TI003" with respect to the device data of the data format indicated by the data type code of "DTC003".

### Processing program determination process

The determination unit 13b performs the processing program determination process as the output destination determination process. For example, the determination unit 13b determines, as an output destination of the device data that is indicated by the tag information, a processing program that is executed on the received device data from among the plurality of processing programs. At this time, the determination unit 13b determines a data processing path for executing two or more data processing in each of processes or a data processing flow for executing single data processing that is selected in each of the processes.

A specific example of the device data storage unit determination process will be described below. Firstly, the determination unit 13b determines {processing program 1: "PP001", processing program 2: "PP002"} as output destinations by using the tag information "TI001" with respect to the device data of the data format indicated by the data type code of "DTC001". Secondly, the determination unit 13b determines {processing program 1-1: "PP001", processing program 1-2: "PP003"} as output destinations by using the tag information "TI002" with respect to the device data of the data format indicated by the data type code of "DTC002". Thirdly, the determination unit 13b determines {processing program 1-1: "PP001", processing program 1-2: "PP003", processing program 2: "PP002"} as output destinations by using the tag information "TI003" with respect to the device data of the data format indicated by the data type code of "DTC003".

### 2-2-3-3. Output unit 13c

The output unit 13c outputs various kinds of information. Meanwhile, the output unit 13c may store various kinds of the output information in the storage unit 12. In the following, the device data output process (a device data storage process and a data processing execution process) will be described.

### Device data output process

The output unit 13c performs the device data output process. For example, the output unit 13c outputs the device data to the determined output destination based on the data type code. At this time, the output unit 13c converts the data format of the received device data to a data format for internal processing, and outputs the converted device data to the determined output destination.

A specific example of the device data output process will be described below. Firstly, the output unit 13c converts the received {measurement data: "MD001-J" } of the JSON format to {measurement data: "MD001"} of the internal data format, and outputs the converted data to the determined output destination. Secondly, the output unit 13c converts the received {error threshold exceeded data: "ES001", error code data: "EC001"} of the CSV format to {error threshold exceeded data: "ES001", error code data: "EC001"} of the internal data format, and outputs the converted data to the determined output destination. Thirdly, the output unit 13c converts the received {health check data: "HC001-A"} of the API integration format to {health check data: "HC001"} of the internal data format, and outputs the converted data to the determined output destination.

### Device data storage process

The output unit 13c performs the device data storage process as the device data output process. For example, the output unit 13c stores the device data that is identified by the data type code in the determined device data storage unit 12b.

A specific example of the device data storage process will be described below. Firstly, the output unit 13c stores {measurement data: "MD001"} that is the device data of the data format indicated by the data type code of "DTC001" and that is converted to the internal data format in the measurement data storage unit 12b-1 as the determined output destination. Secondly, the output unit 13c stores {error threshold exceeded data: "ES001", error code data: "EC001"} each of which is the device data of the data format indicated by the data type code of "DTC002" and each of which is converted to the internal data format in each of the error threshold exceeded data storage unit 12b-2 and the error code data storage unit 12b-3 as the determined output destination. Thirdly, the output unit 13c stores {health check data: "HC001"} that is the device data of the data format indicated by the data type code of "DTC003" and that is converted to the internal data format in the health check data storage unit 12b-4 as the determined output destination.

### Data processing execution process

The output unit 13c performs the data processing execution process. For example, the output unit 13c performs data processing on the device data that is identified by the data type code, by using the determined processing program.

A specific example of the device data storage process will be described below. Firstly, the output unit 13c inputs {measurement data: "MD001"} that is the device data of the data format indicated by the data type code of "DTC001" and that is converted to the internal data format to {processing program 1: "PP001", processing program 2: "PP002"} as the determined output destinations, and performs data processing. Secondly, the output unit 13c inputs {error threshold exceeded data: "ES001", error code data: "EC001"} that are the device data of the data format indicated by the data type code of "DTC002" and that are converted to the internal data format to {processing program 1-1: "PP001", processing program 1-2: "PP003"} as the determined output destination, and performs data processing. Thirdly, the output unit 13c inputs {health check data: "HC001"} that is the device data of the data format indicated by the data type code of "DTC003" and that is converted to the internal data format to {processing program 1-1: "PP001", processing program 1-2: "PP003", processing program 2: "PP002"} as the determined output destination, and performs data processing.

### 2-3. Configuration example and process example of plant device 20

A configuration example and a process example of the plant device 20 will be described below with reference to FIG. 4. For example, the plant device 20 includes the control device 20A, the communication device 20B, and the measurement device 20C.

### 2-3-1. Control device 20A

The control device 20A collects data from the communication device 20B and the measurement device 20C, and controls the communication device 20B and the measurement device 20C. For example, the control device 20A acquires control data including a control signal or the like of the plant.

### 2-3-2. Communication device 20B

The communication device 20B is a gateway device or the like, and controls communication of the control device 20A and the communication device 20B. For example, the communication device 20B acquires communication amount data including a communication amount or the like of the plant.

### 2-3-3. Measurement device 20C

The measurement device 20C is a sensor device, such as a temperature sensor, a pressure sensor, or a flow sensor, and acquires sensor data, such as temperature data, pressure sensor, or flow rate data, in the plant.

### 3. Specific example of each of processes performed by data processing system 100

A specific example of each of processes performed by the data processing system 100 according to one embodiment will be described below with reference to FIG. 8 to FIG. 17. In the following, a specific example 1 and a specific example 2 of each of processes performed by the data processing system 100-P according to the reference technology will be first described, and thereafter, a specific example 1 to a specific example 5 of each of processes performed by the data processing system 100 will be described.

### 3-1. Specific example 1 of data processing system 100-P

The specific example 1 of the data processing system 100-P according to the reference technology will be described below with reference to FIG. 8. FIG. 8 is a diagram illustrating the specific example 1 of the data processing system 100-P according to the reference technology. As illustrated in FIG. 8, firstly, the data processing system 100-P performs "data reception" on the device data. Secondly, the data processing system 100-P performs "data buffer" on the device data. Thirdly, the data processing system 100-P performs "data format conversion" on the device data and stores the device data in the device data storage unit 12b-P. At this time, the device data that is stored in the device data storage unit 12b-P is "sensor configuration information", "data definition information", "tenant information", "measurement data", "error data", "alarm information", "system monitoring information", and the like. Fourthly, the data processing system 100-P performs "data processing", "UI output", "file output", "API integration", and the like by using the device data that is stored in the device data storage unit 12b-P.

### 3-2. Specific example 2 of the data processing system 100-P

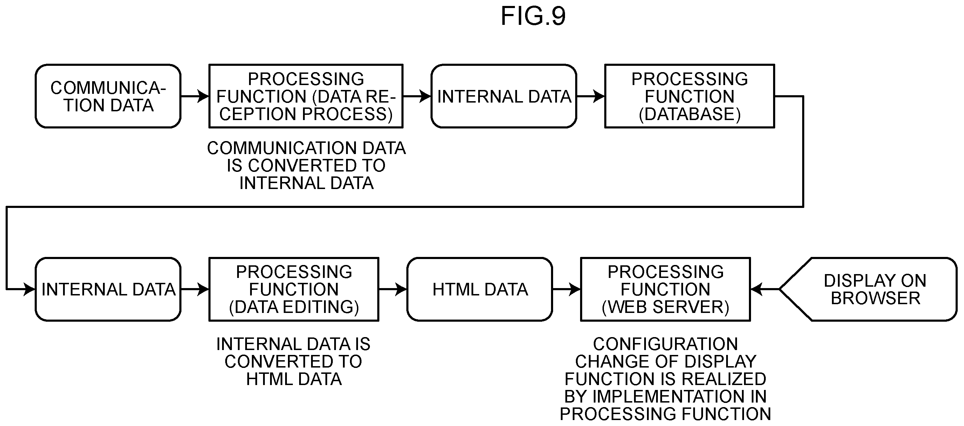

The specific example 2 of the data processing system 100-P according to the reference technology will be described below with reference to FIG. 9. FIG. 9 is a diagram illustrating the specific example 2 of the data processing system 100-P according to the reference technology. As illustrated in FIG. 9, firstly, the data processing system 100-P performs a "processing function (data reception process)" on "communication data" as the device data. At this time, the "communication data" is converted to "internal data". Secondly, the data processing system 100-P performs a "processing function (database)" on the "internal data". At this time, the "internal data" is stored in the device data storage unit 12b-P. Thirdly, the data processing system 100-P performs a "processing function (data editing)" on the "internal data". At this time, the "internal data" is converted to "HyperText Markup Language (HTML) data". Fourthly, the data processing system 100-P performs a "processing function (Web server)" on the "HTML data", and displays the "HTML data" on a browser. At this time, a configuration change of the display function is realized by implementation in the processing function. Meanwhile, in the data processing system 100-P, an interface for each of the processing functions as described above is fixed.

### 3-3. Specific example 1 of each of processes performed by data processing system 100

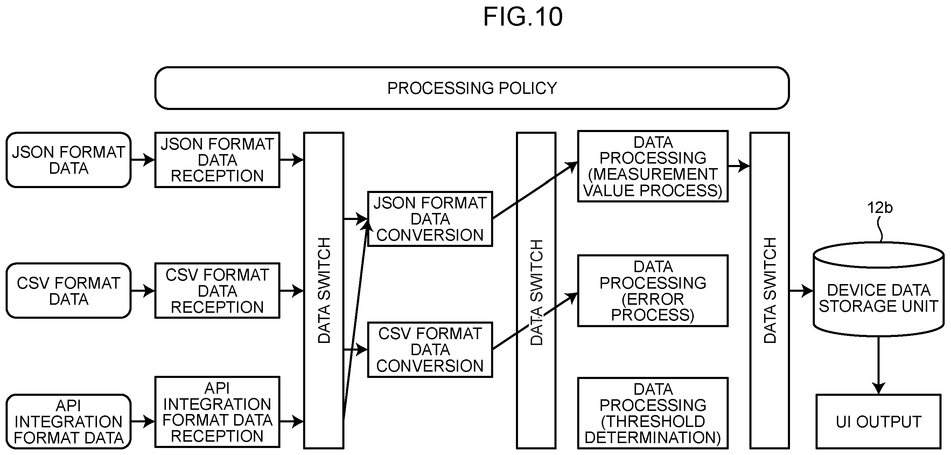

The specific example 1 of each of processes performed by the data processing system 100 according to one embodiment will be described below with reference to FIG. 10. FIG. 10 is a diagram illustrating the specific example 1 of each of the processes performed by the data processing system 100 according to one embodiment. In the following, as the specific example 1, an example will be described in which data processing is performed by using a data switch depending on the data format, such as the JSON format, the CSV format, or the API integration format, based on the processing policy, in particular, based on the device setting information.

In the example illustrated in FIG. 10, firstly, the data processing system 100 performs "JSON format data reception" on "JSON format data", goes through a first data switch, and performs "JSON format data conversion". Further, the data processing system 100 performs "CSV format data reception" on "CSV format data", goes through the first data switch, and performs "CSV format data conversion". Furthermore, the data processing system 100 performs "API integration format data reception" on "API integration format data", goes through the first data switch, and performs "JSON format data reception".

Secondly, after performing the "JSON format data conversion", the data processing system 100 goes through a second data switch, and performs "data processing (measurement value process)". Further, after performing the "CSV format data conversion", the data processing system 100 goes through the second data switch, and performs "data processing (error process)" or "data processing (threshold determination)".

Thirdly, after performing the "data processing (measurement process)", the "data processing (error process)", the "data processing (threshold determination)", or the like, the data processing system 100 goes through a third data switch, stores the device data in the device data storage unit 12b, and performs "UI output".

### 3-4. Specific example 2 of each of processes performed by data processing system 100

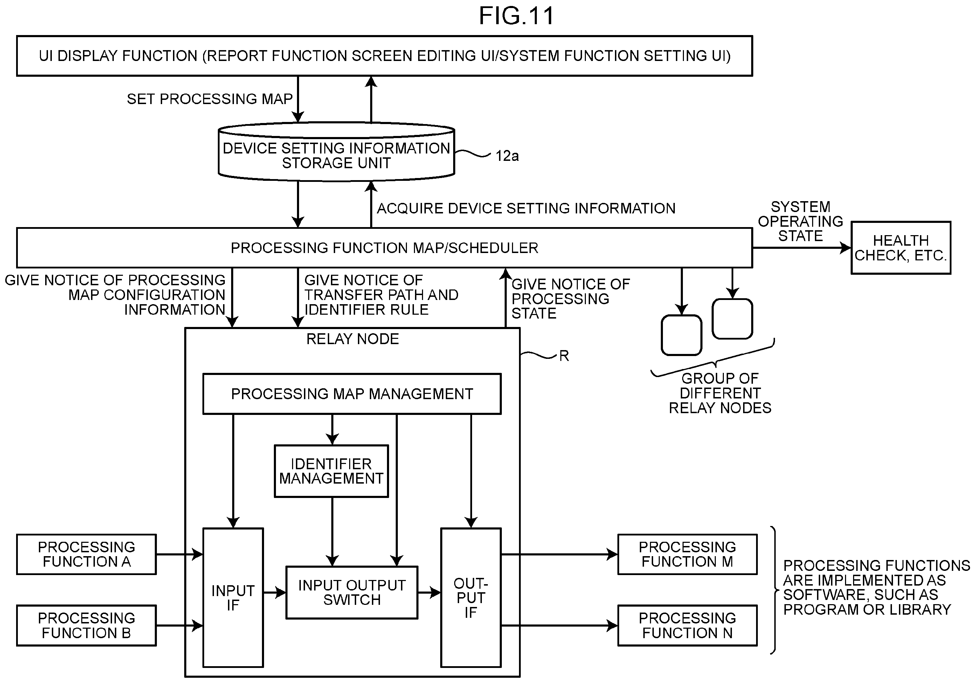

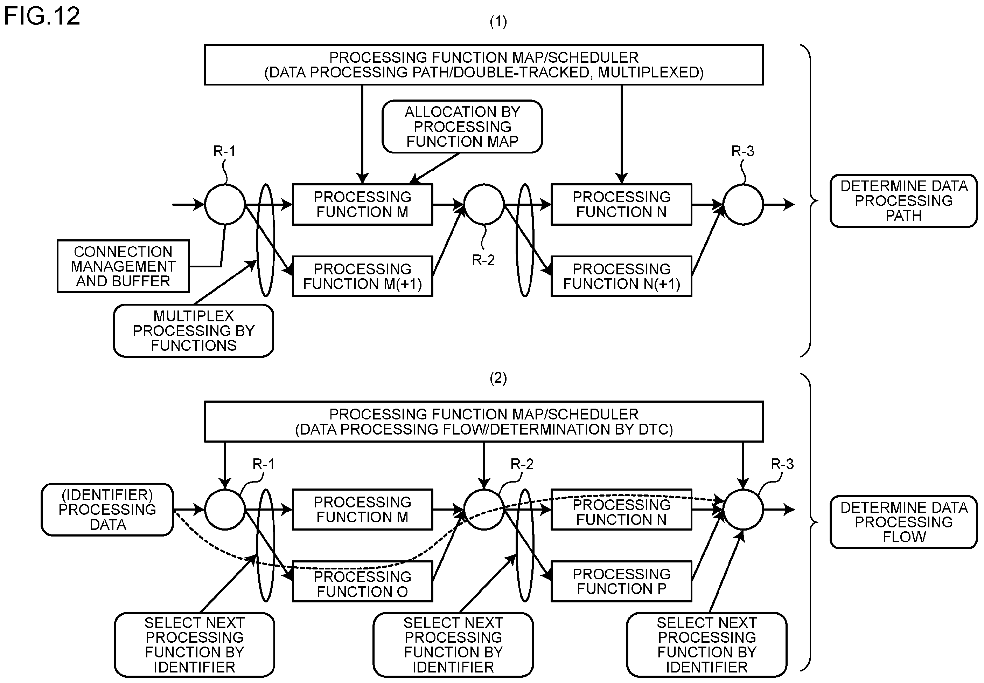

The specific example 2 of each of processes performed by the data processing system 100 according to one embodiment will be described below with reference to FIG. 11 and FIG. 12. FIG. 11 is a diagram illustrating a specific example 2-1 of each of processes performed by the data processing system 100 according to one embodiment. FIG. 12 is a diagram illustrating a specific example 2-2 of each of processes performed by the data processing system 100 according to one embodiment. In the following, as the specific example 2, a specific example of functions and each of components of the server apparatus 10 will be first described, and thereafter, an application example for determining a processing function by using the device setting information will be described.

### 3-4-1. Specific example of function of server apparatus 10

A specific example of the function of the server apparatus 10 will be described below. The server apparatus 10 is an information processing apparatus that provides a function of a wide area monitoring system, and has an input function to collect data from the plant device 20, such as a sensor device, a processing function to convert a data format of the collected data and stores the collected data, a processing function to perform data editing on the stored data (for example: a function to represent the data by a graph or a ledger sheet, or a calculation function to perform inter-data calculation and obtain new data), and an output function to display the data by a UI or cooperate with other systems.

### 3-4-2. Specific example of each of components of server apparatus 10

A specific example of each of the components of the server apparatus 10 will be described below. In the following, a processing function, a relay node, a processing function map/scheduler, and a UI display function will be described.

### 3-4-2-1. Processing function

The processing function is a software module that includes a processing program and a library. Further, the processing function provides a function of a network communication process, a communication protocol process, a data format conversion process, a data editing process, a graph display process, an external data linking process, or the like.

### 3-4-2-2. Relay node R

The relay node R includes functions of an input interface (input IF), an output interface (output IF), an input output switch, identifier management, and processing map management.

The input interface is a function to capture output data of the processing function. At this time, function combining with the processing function is performed by using a program interface function of the reference technology. Further, the input interface has a function that is able to cope with both of a case in which a data reception process with respect to the processing function is passively performed and a case in which data acquisition is spontaneously performed in cooperation with the processing map management.

The output interface is a function to write input data in the processing function. Function combining with the processing function is performed by using the program interface function of the reference technology. Further, the output interface has a function that is able to cope with both of a case in which a process is started by designating data with respect to the processing function and a case in which the processing function spontaneously acquires data.

The input output switch is a function to acquire identifier information in cooperation with the identifier management and outputs, from identifier information that is added to data that is input from the input interface, information to an output interface that is designated by the processing map management.

The identifier management is a function to provide an identifier to the input output switch in cooperation with the processing map management, and a function to store or delete an identifier in response to an instruction from the processing map management.

The processing map management is a function to combine the processing function and the input interface, a function to combine the processing function and the output interface, a function to construct a data flow path between the input interface, the input output switch, and the output interface, and a function to associate the identifier with the constructed data flow path, in response to an instruction from the processing function map/scheduler. Further, the processing map management has a function to notify the processing function map/scheduler of a processing state of the relay node.

### 3-4-2-3. Processing function map-scheduler

The processing function map/scheduler has a function to acquire processing map setting information from the device setting information storage unit 12a that includes the processing policy, and notify a processing map management function of each of the relay nodes R of processing map information. Further, the processing function map/scheduler has a function to acquire transfer path information and data identifier information from the device setting information storage unit 12a, and notifies the processing map management function of each of the relay nodes R of the information. Furthermore, the processing function map/scheduler has a function to instruct the processing map management function of the relay node R to perform processing in accordance with a processing schedule. Moreover, the processing function map/scheduler has a function to receive a processing state of the relay node R from the processing map management function of the relay node R and notifies a health check function of the processing state as a system operating state.

### 3-4-2-4. UI display function

The UI display function (a report function screen editing UI/a system function setting UI) has a UI, loads function information that is input by the operator O into the processing map information, the transfer path information, and the data identifier information, and outputs the information to the device setting information storage unit 12a that includes the processing policy. At this time, conversion of the setting information into the processing map information, the transfer path information, and the data identifier information by the UI is implemented by a program based on the reference technology.

The processing map information defines a relation between the processing function and the relay node R as the map information. Here, the transfer path information is a definition in which data including the data identifier information is associated with a route of the processing map information. The data identifier information defines an identifier that identifies data. Further, the data identifier information includes information about a processing function or the relay node R for performing addition, information about whether or not a content is to be updated, or the like. Further, the identifier is not configured in a unique manner, but data expression is configured in a plurality of expressions (for example: ID and a character string name), and, in the data processing system 100 for wide area monitoring, the identifier may be, for example, a data type code, a device ID, a tag name, or the like.

### 3-4-3. Each of processes in specific example 2-1

The specific example 2-1 of each of processes performed by the data processing system 100 will be described below with reference to FIG. 11. In the following, each of processes by the UI display function (the report function screen editing UI/the system function setting UI), the processing function map/scheduler, and the relay node R will be described.

### 3-4-3-1. UI display function

As illustrated in FIG. 11, the UI display function (the report function screen editing UI/the system function setting UI) transmits and receives various kinds of information to and from the device setting information storage unit 12a that includes the processing policy. For example, the UI display function sets a processing map with respect to the device setting information storage unit 12a.

### 3-4-3-2. Processing function map-scheduler

As illustrated in FIG. 11, the processing function map/scheduler transmits and receives various kinds of information to and from the device setting information storage unit 12a that includes the processing policy. For example, the processing function map/scheduler acquires the device setting information from the device setting information storage unit 12a. Further, the processing function map/scheduler transmits the system operating state and performs a system health check on the plant or the like.

The processing function map/scheduler transmits and receives various kinds of information to and from the relay node R. For example, the processing function map/scheduler notifies the relay node R of processing map configuration information. Further, the processing function map/scheduler notifies the relay node R of a transfer path, an identifier rule, or the like. Furthermore, the processing function map/scheduler receives a notice of the processing state from the relay node R. Furthermore, the processing function map/scheduler transmits and receives various kinds of information to and from a group of different relay nodes R.

### 3-4-3-3. Relay node R

As illustrated in FIG. 11, the relay node R includes the processing map management, the input interface, the identifier management, the input output switch, and the output interface. In the example illustrated in FIG. 11, the relay node R receives a "processing function A" and a "processing function B" by the input interface, and outputs a "processing function M" and a "processing function N" from the output interface. At this time, the processing functions to be output are implemented as software, such as a program or a library.

Here, to implement a processing path, a processing map, or the like, the processing map management uses an information structure of JSON, Extensible Markup Language (XML), or the like. The input interface has not only a function of a data push type, but also a function of a data pull type, and is driven by a scheduler. The identifier management is implemented by processing with a database with respect to identifier processing. The input output switch distributes a data transfer destination by an identifier. The output interface has not only a function of a data push type, but also a function of a data pull type, and is driven by a scheduler.

### 3-4-3-4. Effect of specific example 2-1

In the specific example 2-1 of each of the processes performed by the data processing system 100, an identifier is added to data to be processed and managed by the processing policy. Further, in the specific example 2-1, the processing program is subdivided and a process corresponding to the identifier is performed, so that it is possible to perform a process by a simple processing program assembly. At this time, the processing program determines a data processing order based on the processing policy that is associated with the identifier. As described above, in the specific example 2-1, it is possible to reduce a development cost for the processing program and improve maintainability.

### 3-4-4. Each of processes in specific example 2-2

The specific example 2-2 of each of processes performed by the data processing system 100 will be described below with reference to FIG. 12. In the following, a data processing path determination process and a data processing flow determination process that are performed by the processing function map/scheduler will be described.

### 3-4-4-1. Data processing path determination process

As illustrated in FIG. 12(1), the processing function map/scheduler determines a data processing path that is double-tracked or multiplexed. In the example illustrated in FIG. 12(1), the processing function map/scheduler determines a "processing function M" and a "processing function M(+1)" as processing functions that are performed between a relay node R-1 and a relay node R-2, and determines a "processing function N" and a "processing function N(+1)" as processing functions that are performed between the relay node R-2 and a relay node R-3.

### 3-4-4-2. Data processing flow determination process

As illustrated in FIG. 12(2), the processing function map/scheduler determines a data processing flow by using the data type code as an identifier. In the example illustrated in FIG. 12(2), the processing function map/scheduler determines a "processing function O" from among the "processing function M" and the "processing function O" as a processing function that is performed between the relay node R-1 and the relay node R-2, and determines a "processing function P" from among the "processing function N" and the "processing function P" as a processing function that is performed between the relay node R-2 and the relay node R-3 (see a dashed arrow).

### 3-4-4-3. Effect of specific example 2-2

In the specific example 2-2 of each of the processes performed by the data processing system 100, the data processing path in which data processing are double-tracked or multiplexed is determined. Further, in the specific example 2-2, the data processing flow is determined by using the data type code as the identifier. As described above, in the specific example 2-2, it is possible to reduce a development cost for the processing program and improve maintainability.

### 3-5. Specific example 3 of each of processes performed by data processing system 100

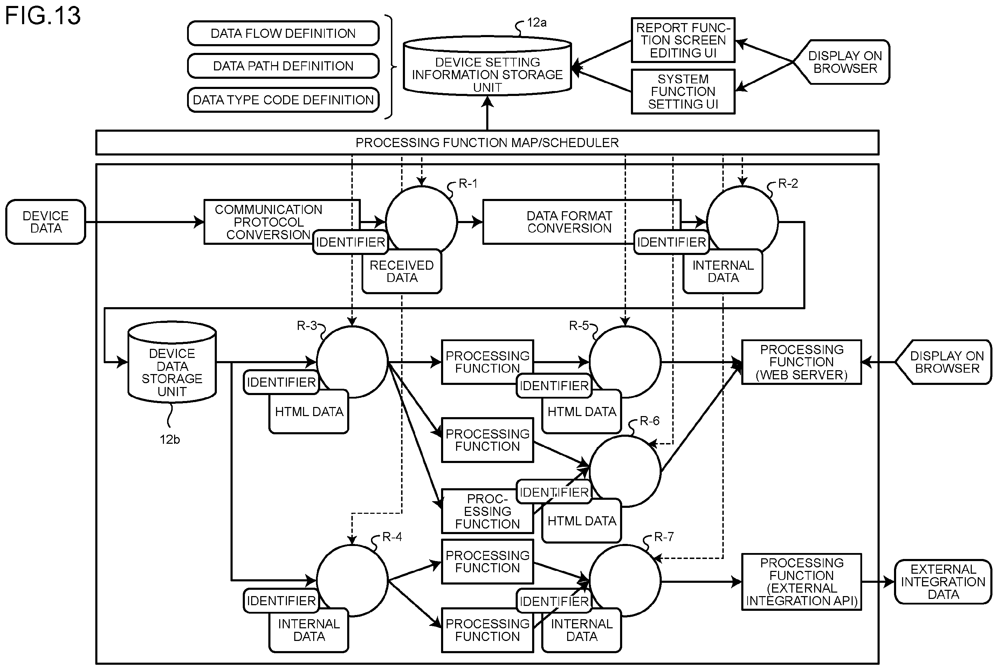

A specific example 3 of each of processes performed by the data processing system 100 will be described below with reference to FIG. 13. FIG. 13 is a diagram illustrating the specific example 3 of each of processes performed by the data processing system 100 according to one embodiment. In the following, as the specific example 3, an application example 1 for determining a processing function by using the device setting information will be described. In the following, each of processes performed by the device setting information storage unit 12a and the processing function map/scheduler will be described.

### 3-5-1. Device setting information storage unit 12a

As illustrated in FIG. 13, the device setting information storage unit 12a stores therein, as the device setting information, a "data flow definition", a "data path definition", and a "data type code definition". Further, the device setting information storage unit 12a receives the device setting information via a "report function screen editing UI" or a "system function setting UI" that is the UI display function that is displayed on the browser of the operator terminal that is used by the operator O, and stores therein the device setting information.

### 3-5-2. Processing function map-scheduler

As illustrated in FIG. 13, the processing function map/scheduler performs each of processes on the device data by transmitting and receiving various kinds of information to and from the device setting information storage unit 12a or the relay node R. In the example illustrated in FIG. 13, firstly, the data processing system 100 performs "communication protocol conversion" on the "device data". At this time, the "device data" is input, as "received data" to which an "identifier" is added, to the relay node R-1. Secondly, "data format conversion" is performed on the "received data". At this time, the "received data" is input, as "internal data" to which the "identifier" is added, to the relay node R-2. Thirdly, the data processing system 100 stores the "internal data" in the device data storage unit 12b. Fourthly, the data processing system 100 performs a plurality of "processing functions" on "HTML data" to which the "identifier" that is stored in the device data storage unit 12b is added, via the relay node R-3. Further, the data processing system 100 performs a plurality of "Processing functions" on "internal data" to which the "identifier" that is stored in the device data storage unit 12b is added, via a relay node R-4. At this time, the "HTML data" is input, as "HTML data" to which the "identifier" is added, to a relay node R-5 or a relay node R-6. Furthermore, the "internal data" is input, as "internal data" to which the "identifier" is added, to a relay node R-7. Fifthly, the data processing system 100 performs a "processing function (Web server)" on the "HTML data" to which the "identifier" is added, and displays the "HTML data" on the browser. Moreover, the data processing system 100 performs a "processing function (external integration API) on the "internal data" to which the "identifier" is added, and outputs the data as "external integration data".

### 3-6. Specific example 4 of each of processes performed by data processing system 100

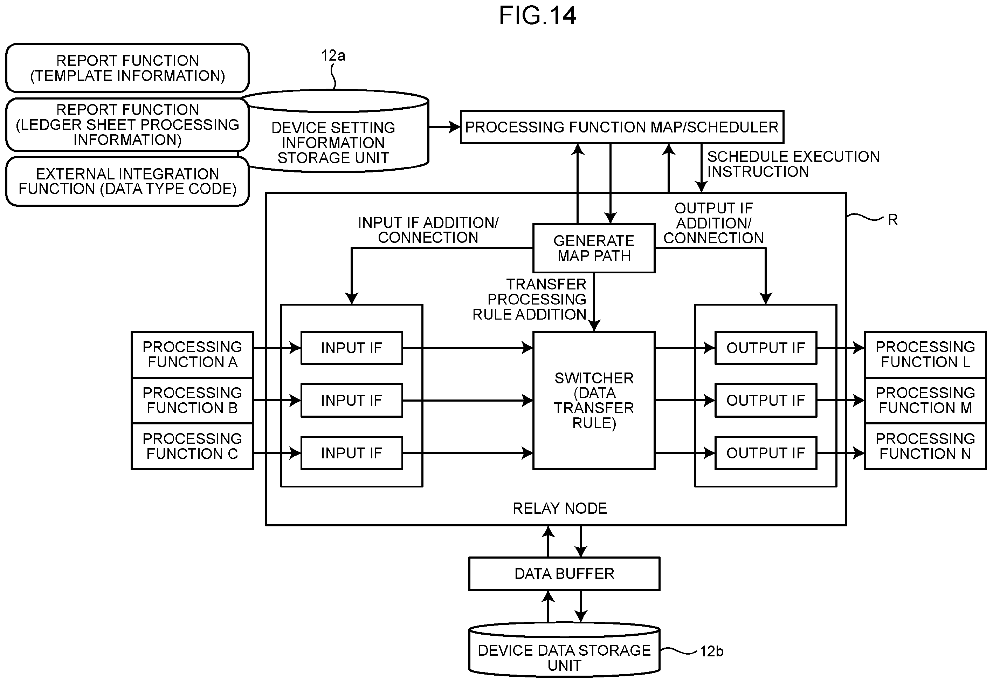

A specific example 4 of each of processes performed by the data processing system 100 will be described below with reference to FIG. 14. FIG. 14 is a diagram illustrating the specific example 4 of each of processes performed by the data processing system 100 according to one embodiment. In the following, as the specific example 4, an application example 2 for determining a processing function by using the device setting information will be described. In the following, each of processes performed by the device setting information storage unit 12a, the processing function map/scheduler, the relay node R, and the device data storage unit 12b will be described.

### 3-6-1. Device setting information storage unit 12a

As illustrated in FIG. 14, the device setting information storage unit 12a stores therein, as the device setting information, a "report function (template information)", a "report function (ledger sheet processing information)", and an "external integration function (data type code)". Further, the device setting information storage unit 12a outputs various kinds of information to the processing function map/scheduler.

### 3-6-2. Processing function map-scheduler

As illustrated in FIG. 14, the processing function map/scheduler transmits and receives various kinds of information to and from the relay node R. For example, the processing function map/scheduler generates a map path and gives an instruction of "input IF addition/connection" to the input interface of the relay node R. Further, the processing function map/scheduler generates a map path and gives an instruction of "transfer processing rule addition" to a switcher of the relay node R. Furthermore, the processing function map/scheduler generates a map path and gives an instruction of "output IF addition/connection" to the output interface of the relay node R. Moreover, the processing function map/scheduler instructs the relay node R to execute a schedule.

### 3-6-3. Relay node R

As illustrated in FIG. 14, the relay node R transmits and receives various kinds of information to and from the processing function map/scheduler and the device data storage unit 12b. For example, the relay node R receives the instruction of "input IF addition/connection" that is generated by the processing function map/scheduler, and inputs a "processing function A", a "processing function B", and a "processing function C" to the input interface. Further, the relay node R receives the instruction of "transfer processing rule addition" by the path map that is generated by the processing function map/scheduler, and transfers the "processing function A", the "processing function B", and the "processing function C" from the input interface to the output interface via the switcher in accordance with the data transfer rule. Furthermore, the relay node R receives the instruction of the "output IF addition/connection" by the path map that is generated by the processing function map/scheduler, and outputs a "processing function L", a "processing function M", and a "processing function N" from the output interface.

### 3-6-4. Device data storage unit 12b

As illustrated in FIG. 14, the device data storage unit 12b transmits and receives various kinds of information to and from the relay node R. For example, the device data storage unit 12b receives the device data on which data buffer is performed from the relay node R, and stores therein the device data. Further, the device data storage unit 12b outputs the device data on which data buffer is performed to the relay node R.

### 3-7. Specific example 5 of each of processes performed by data processing system 100

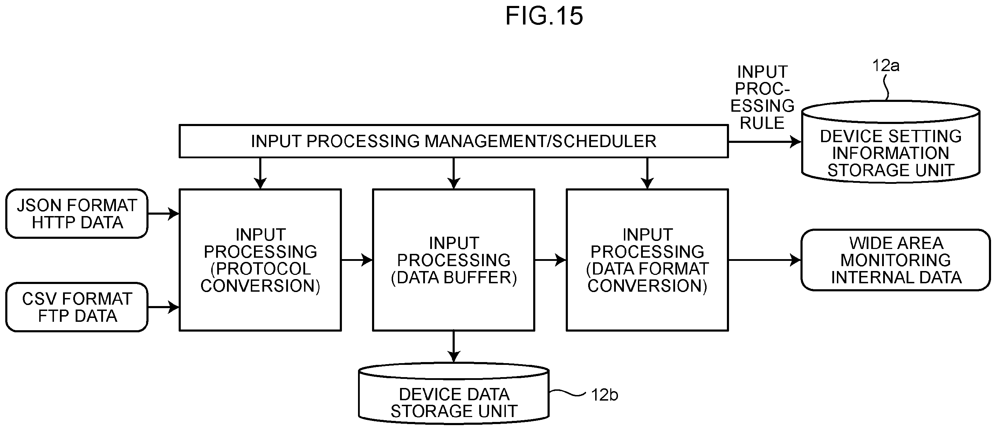

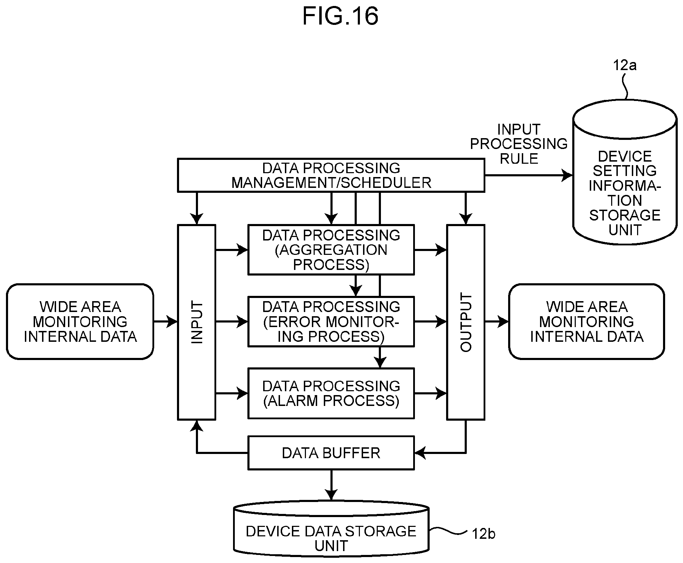

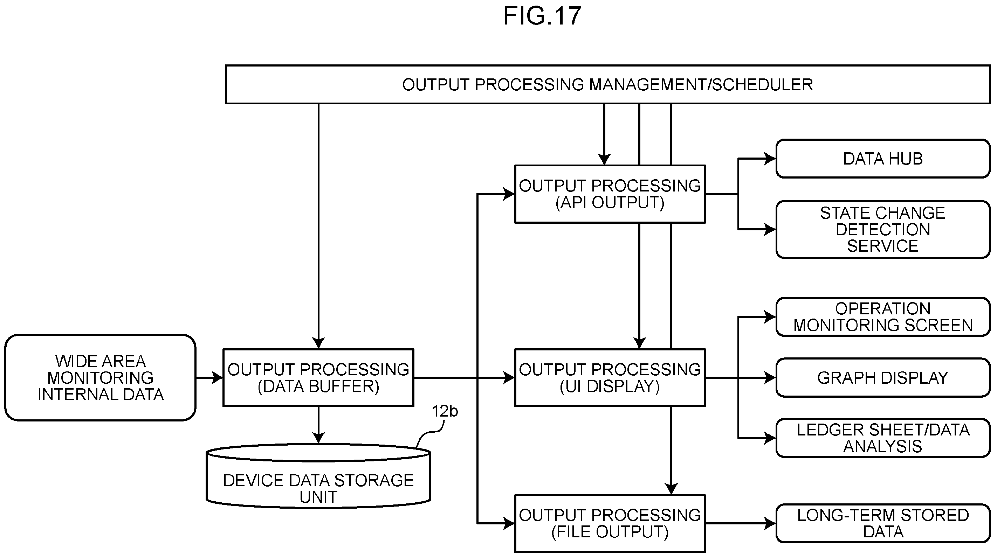

A specific example 5 of each of the processes performed by the data processing system 100 will be described below with reference to FIG. 15 to FIG. 17. FIG. 15 is a diagram illustrating a specific example 5-1 of each of processes performed by the data processing system 100 according to one embodiment. FIG. 16 is a diagram illustrating a specific example 5-2 of each of processes performed by the data processing system 100 according to one embodiment. FIG. 17 is a diagram illustrating a specific example 5-3 of each of processes performed by the data processing system 100 according to one embodiment. In the following, as the specific example 5, an application example 3 to an application example 5 for determining a processing function by using the device setting information will be described. In the following, input processing management, data processing management, and output processing management will be described.

### 3-7-1. Input processing management

The application example 3 for determining a processing function by using the device setting information will be described below with reference to FIG. 15. As illustrated in FIG. 15, the data processing system 100 outputs an input processing rule to the device setting information storage unit 12a via an input processing management/scheduler. Further, the data processing system 100 performs "input processing (protocol conversion)" on "JSON format HTTP data" and "CSV format File Transfer Protocol (FTP) data" that are the device data via the input processing management/scheduler, performs "input processing (data buffer)", performs output to the device data storage unit 12b, performs "input processing (data format conversion)", and outputs the device data as "wide area monitoring internal data)" that is converted to the internal data format.

### 3-7-2. Data processing management

The application example 4 for determining a processing function by using the device setting information will be described below with reference to FIG. 16. As illustrated in FIG. 16, the data processing system 100 outputs an input processing rule to the device setting information storage unit 12a via a data processing management/scheduler. Further, the data processing system 100 inputs, via the data processing management/scheduler, "wide area monitoring internal data" that is obtained by converting the device data to the internal data format, performs "data processing (aggregation process)", "data processing (error monitoring process)", and "data processing (alarm process)", and outputs data as the "wide area monitoring internal data" on which the data processing has been performed. At this time, the data processing system 100 performs data buffer on the "wide area monitoring internal data" on which the data processing has been performed, and outputs the data to the device data storage unit 12b via the data processing management/scheduler. Furthermore, the data processing system 100 performs data buffer on the "wide area monitoring internal data" on which the data processing has been performed, and thereafter performs data processing again via the data processing management/scheduler.

### 3-7-3. Output processing management

The application example 5 for determining a processing function by using the device setting information will be described below with reference to FIG. 17. As illustrated in FIG. 17, the data processing system 100 performs "output processing (data buffer)" on "wide area monitoring internal data" on which the data processing has been performed via an output processing management/scheduler, outputs the data to the device data storage unit 12b, performs "output processing (API output)", "output processing (UI display)", and "output processing (file output)", and outputs data as various kinds of data. At this time, the data processing system 100 outputs, as output data of the "output processing (API process)" for example, data that is used for "data HUB" and a "state change detection service" via the data processing management/scheduler. Further, the data processing system 100 outputs, as output data of the "output processing (UI display) for example, data that is used for an "operation monitoring screen", "graph display", a "ledger sheet/data analysis" via the data processing management/scheduler. Furthermore, the data processing system 100 outputs, as output data of the "output processing (file output) for example, data that is used for "long-term stored data" via the data processing management/scheduler.

### 4. Flow of each of processes performed by data processing system 100

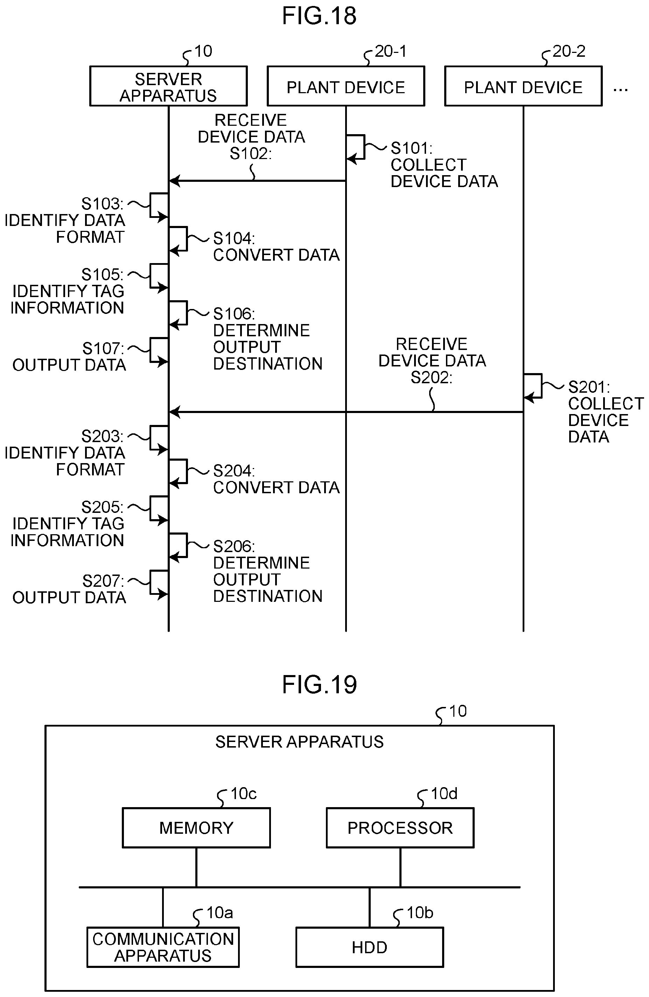

The flow of processes performed by the data processing system 100 according to one embodiment will be described below with reference to FIG. 18. FIG. 18 is a sequence diagram illustrating an example of the entire flow of the data processing system 100 according to one embodiment. Meanwhile, processes from Step S101 to Step S107 and processes from Step S201 to Step S207 below may be performed in a different order. Further, some of the processes from Step S101 to Step S107 and from Step S201 to Step S207 may be omitted.

### 4-1. Device data collection process

Firstly, the plant device 20 (20-1, 20-2) performs a device data collection process (Step S101 and Step S201). For example, a plant device 20-1 collects measurement data of the JSON format in the plant. Further, a plant device 20-2 collects communication amount data of the CSV format in the plant.

### 4-2. Device data reception process

Secondly, the server apparatus 10 performs the device data reception process (Step S102 and Step S202). For example, the server apparatus 10 receives the measurement data of the JSON format that is collected by the plant device 20-1, together with the data type code. Further, the server apparatus 10 receives the communication amount data of the CSV format that is collected by the plant device 20-2, together with the data type code.

### 4-3. Data format identification process

Thirdly, the server apparatus 10 performs a data format identification process (Step S103 and Step S203). For example, the server apparatus 10 identifies the measurement data that is received from the plant device 20-1 as the JSON format based on the data type code. Further, the server apparatus 10 identifies the communication amount data that is received from the plant device 20-2 as the CSV format based on the data type code.

### 4-4. Data conversion process

Fourthly, the server apparatus 10 performs the data conversion process (Step S104 and Step S204). For example, the server apparatus 10 converts the measurement data that is received from the plant device 20-1 from the JSON format to internal data for internal processing. Further, the server apparatus 10 converts the communication amount data that is received from the plant device 20-2 from the CSV format to internal data for internal processing.

### 4-5. Tag information identification process

Fifthly, the server apparatus 10 performs a tag information identification process (Step S105 and Step S205). For example, the server apparatus 10 refers to the device setting information storage unit 12a, and identifies tag information corresponding to the measurement data that is received from the plant device 20-1. Further, the server apparatus 10 refers to the device setting information storage unit 12a, and identifies tag information corresponding to the communication amount data that is received from the plant device 20-2.

### 4-6. Output destination determination process

Sixthly, the server apparatus 10 performs an output destination determination process (Step S106 and Step S206). For example, the server apparatus 10 determines an output destination of the measurement data that is received from the plant device 20-1, based on the identified tag information. Further, the server apparatus 10 determines an output destination of the communication amount data that is received from the plant device 20-2, based on the identified tag information.

### 4-7. Data output process

Seventhly, the server apparatus 10 performs the data output process (Step S107 and Step S207). For example, the server apparatus 10 outputs, to the determined output destination, the internal data of the measurement data that is received from the plant device 20-1. Further, the server apparatus 10 outputs, to the determined output destination, the internal data of the communication amount data that is received from the plant device 20-2.

### 5. Effects of one embodiment

Effects of one embodiment will be described. A first effect to a tenth effect corresponding to the processes according to one embodiment will be described below.

### 5-1. First effect

Firstly, in one process according to one embodiment as described above, the server apparatus 10 includes the device setting information storage unit 12a that stores therein device setting information that includes tag information that is set in association with a device that is included in a system and a data type code that indicates a data format, receives device data that is transmitted by the device, determines an output destination of the device data in accordance with the device format based on the tag information, and outputs the device data to the determined output destination based on the data type code. Therefore, with this process, in the data processing technology, it is possible to reduce a load on the operator O.

### 5-2. Second effect

Secondly, in one process according to one embodiment as described above, the server apparatus 10 further includes the plurality of device data storage units 12b that store therein the device data, receives the device data together with the data type code, determines, as an output destination of the device data that is indicated by the tag information, a device data storage unit for storing the received device data from among the plurality of device data storage units, and stores the device data that is identified by the data type code in the determined device data storage unit 12b. Therefore, with this process, in the data processing technology, by determining a storage destination of the device data, it is possible to reduce a load on the operator O.

### 5-3. Third effect

Thirdly, in one process according to one embodiment as described above, the server apparatus 10 determines, from among the plurality of device data storage units 12b, the device data storage unit 12b for storing at least one of measurement data that is collected by the device, error threshold exceeded data that indicates the measurement data that exceeds an error threshold of the system, error code data that indicates a type of an error that has occurred in the system, and health check data that indicates an inspection result of the system. Therefore, with this process, in the data processing technology, by determining a storage destination of the measurement data, the error threshold exceeded data, the error code data, and the health check data, it is possible to reduce a load on the operator O.

### 5-4. Fourth effect

Fourthly in one process according to one embodiment as described above, the server apparatus 10 further includes the processing program storage unit 12c that stores therein a plurality of processing programs that enables data processing to be performed on the device data, receives the device data together with the data type code, determines, as an output destination of the device data that is indicated by the tag information, a processing program that is to be performed on the received device data from among the plurality of processing programs, and performs data processing on the device data that is identified by the data type code by using the determined processing program. Therefore, with this process, in the data processing technology, by determining data processing that is to be executed on the device data, it is possible to reduce a load on the operator O.

### 5-5. Fifth effect

Fifthly, in one process according to one embodiment as described above, the server apparatus 10 determines one of a data processing path for performing two or more data processing in each of processes and a data processing flow for performing single data processing that is selected in each of the processes. Therefore, with this process, in the data processing technology, by determining the path or the flow of the data processing that is performed on the device data, it is possible to reduce a load on the operator O.

### 5-6. Sixth effect

Sixthly, in one process according to one embodiment as described above, the server apparatus 10 converts the data format of the received device data to a data format for internal processing, and outputs the converted device data to the determined output destination. Therefore, with this process, in the data processing technology, by converting the device data to internal data, it is possible to reduce a load on the operator O.

### 5-7. Seventh effect

Seventhly, in one process according to one embodiment as described above, the server apparatus 10 receives, as the data format, the data format of at least one of a JSON format, a CSV format, and an API integration format. Therefore, with this process, in the data processing technology, by receiving the device data of the JSON format, the CSV format, and the API integration format, it is possible to reduce a load on the operator O.

### 5-8. Eighth effect

Eighthly, in one process according to one embodiment as described above, the server apparatus 10 receives the device setting information that is input by the operator O via an operator terminal, and stores the device setting information in the device setting information storage unit 12a. Therefore, with this process, in the data processing technology, by easily changing the output destination of the device data, it is possible to reduce a load on the operator O.

### 5-9. Ninth effect

Ninthly, in one process according to one embodiment as described above, when the operator O changes association of the tag information via the device setting information input screen that is displayed on the operator terminal, the server apparatus 10 updates the device setting information that is stored in the device setting information storage unit 12a, refers to the tag information that is indicated by the updated device setting information, and determines an output destination of the device data in accordance with the data format. Therefore, with this process, in the data processing technology, by allowing a change of the tag information at a later time and by easily changing the output destination of the device data, it is possible to reduce a load on the operator O.

### 5-10. Tenth effect

Tenthly, in one process according to one embodiment as described above, when the operator O adds association of the tag information via the device setting information input screen that is displayed on the operator terminal, the server apparatus 10 updates the device setting information that is stored in the device setting information storage unit 12a, refers to the tag information that is indicated by the updated device setting information, and determines addition of an output destination of the device data in accordance with the data format. Therefore, with this process, in the data processing technology, by allowing addition of the tag information at a later time and by easily adding the output destination of the device data, it is possible to reduce a load on the operator O.

### 5-11. Eleventh effect

Eleventhly, in one process according to one embodiment as described above, when the operator O changes, in particular, modifies association of the tag information to new different information via the device setting information input screen that is displayed on the operator terminal, the server apparatus 10 updates the device setting information that is stored in the device setting information storage unit 12a, refers to the tag information that is indicated by the updated device setting information, and determines an output destination of the device data in accordance with the data format. Therefore, with this process, in the data processing technology, by allowing a change of the tag information to new different information at a later time and by easily changing or adding the output destination of the device data, it is possible to reduce a load on the operator O.

### 5-12. Twelfth effect

Twelfthly, in one process according to one embodiment as described above, when the operator O changes and adds association of the tag information via the device setting information input screen that is displayed on the operator terminal, the server apparatus 10 updates the device setting information that is stored in the device setting information storage unit 12a, refers to the tag information that is indicated by the updated device setting information, and determines a change and addition of an output destination of the device data in accordance with the data format. Therefore, with this process, in the data processing technology, by allowing a change and addition of the tag information at a later time and by easily changing and adding the output destination of the device data, it is possible to reduce a load on the operator O.

### 5-13. Thirteenth effect

Thirteenthly, in one process according to one embodiment as described above, when the operator O changes the data type code via the device setting information input screen that is displayed on the operator terminal, the server apparatus 10 updates the device setting information that is stored in the device setting information storage unit 12a, refers to the data type code that is indicated by the updated device setting information, and determines the data format in which the device data is output. Therefore, with this process, in the data processing technology, by allowing a change of the data type code at a later time and by easily changing the data format in which the device data is output, it is possible to reduce a load on the operator O.

### 5-14. Fourteenth effect

Fourteenthly, in one process according to one embodiment as described above, when the operator O adds the data type code via the device setting information input screen that is displayed on the operator terminal, the server apparatus 10 updates the device setting information that is stored in the device setting information storage unit 12a, refers to the data type code that is indicated by the updated device setting information, and determines the data format in which the device data is output. Therefore, with this process, in the data processing technology, by allowing addition of the data type code at a later time and by easily changing the data format in which the device data is output, it is possible to reduce a load on the operator O.

### 5-15. Fifteenth effect

Fifteenthly, in one process according to one embodiment as described above, when the operator O changes, in particular, modifies the data type code to new different information via the device setting information input screen that is displayed on the operator terminal, the server apparatus 10 updates the device setting information that is stored in the device setting information storage unit 12a, refers to the data type code that is indicated by the updated device setting information, and determines the data format in which the device data is output. Therefore, with this process, in the data processing technology, by allowing a change of the data type code to new different information at a later time and by easily changing the data format in which the device data is output, it is possible to reduce a load on the operator O.

### 5-16. Sixteenth effect

Sixteenthly, in one process according to one embodiment as described above, when the operator O changes and adds the data type code via the device setting information input screen that is displayed on the operator terminal, the server apparatus 10 updates the device setting information that is stored in the device setting information storage unit 12a, refers to the data type code that is indicated by the updated device setting information, and determines the data format in which the device data is output. Therefore, with this process, in the data processing technology, by allowing a change and addition of the data type code at a later time and by easily changing the data format in which the device data is output, it is possible to reduce a load on the operator O.

### 5-17. Seventeenth effect

Seventeenthly, in one process according to one embodiment as described above, the device is the plant device 20 that is related to control of a plant, and at least one of the control device 20A, the communication device 20B, and the measurement device 20C. Therefore, with this process, in the data processing technology for the plant, it is possible to reduce a load on the operator O.

### 6. System

The processing procedures, control procedures, specific names, and information including various kinds of data and parameters illustrated in the above-described document and drawings may be arbitrarily changed unless otherwise specified.

Furthermore, the components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings. That is, all or part of the apparatuses may be functionally or physically distributed or integrated in arbitrary units depending on various loads or use conditions.

Moreover, all or an arbitrary part of various kinds of processing functions that are implemented by the apparatuses may be realized by a CPU or a program that is analyzed and executed by the CPU, or may be realized by hardware using wired logic.

### 7. Hardware

A hardware configuration example of the server apparatus 10 will be described below. Meanwhile, the other apparatuses may have the same hardware configurations. FIG. 19 is a diagram illustrating a hardware configuration example according to one embodiment. As illustrated in FIG. 19, the server apparatus 10 includes a communication apparatus 10a, a Hard Disk Drive (HDD) 10b, a memory 10c, and a processor 10d. Further, all of the units illustrated in FIG. 19 are connected to one another via a bus or the like.

The communication apparatus 10a is a network interface card or the like, and performs communication with a different server or the like. The HDD 10b stores therein a program or a database for implementing the functions as illustrated in FIG. 4.

The processor 10d reads, from the HDD 10b or the like, a program that executes the same processes as those of each of the processing units illustrated in FIG. 4, loads the program onto the memory 10c, and executes the processes that implement each of the functions illustrated in FIG. 4 or the like. For example, the processes implement the same functions as those of each of the processing units that are included in the server apparatus 10. Specifically, the processor 10d from the HDD 10b or the like, a program that has the same functions as those of the receiving unit 13a, the determination unit 13b, the output unit 13c, and the like. Further, the processor 10d executes a process for implementing the same processes as those of an execution unit 15a, the receiving unit 13a, the determination unit 13b, the output unit 13c, and the like.

In this manner, the server apparatus 10 operates as an apparatus that reads and executes the program to implement various kinds of processing methods. Further, the server apparatus 10 is able to implement the same functions as those of one embodiment as described above by causing a medium reader to read the above-described program from a recording medium and execute the read program. Meanwhile, the program according one embodiment need not always be executed by the server apparatus 10. For example, the present invention may be applied in the same manner even when a different computer or a different server apparatus executes the above-described program or the different computer and the different server apparatus execute the above-described program in a cooperative manner.

The program may be distributed via a network, such as the Internet. Further, the program may be recorded in a computer readable recording medium, such as a hard disk, a flexible disk (FD), a compact disc-read only memory (CD-ROM), a Magneto-Optical disk (MO), or a Digital Versatile Disk (DVD), and may be read and executed from the recording medium by a computer.

According to one aspect of the present invention, in the data processing technology, it is possible to reduce a load on an administrator.

## Claims

1. An information processing apparatus (10) comprising:
a device setting information storage unit (12a) that stores therein device setting information that includes tag information that is set in association with a device (20) that is included in a system and a data type code that indicates a data format;
a receiving unit (13a) that receives device data that is transmitted by the device (20);
a determination unit (13b) that determines an output destination of the device data in accordance with the data format based on the tag information; and
an output unit (13c) that outputs the device data to the determined output destination based on the data type code.

2. The information processing apparatus (10) according to claim 1, further comprising:
a plurality of device data storage units (12b) that store therein the device data, wherein
the receiving unit (13a) receives the device data together with the data type code,
the determination unit (13b) determines, as an output destination of the device data that is indicated by the tag information, a device data storage unit (12b) for storing the received device data from among the plurality of the device data storage units (12b), and
the output unit (13c) stores the device data that is identified by the data type code in the determined device data storage unit (12b).

3. The information processing apparatus (10) according to claim 2, wherein the determination unit (13b) determines, from among the plurality of the device data storage units (12b), the device data storage unit (12b) for storing at least one of measurement data that is collected by the device (20), error threshold exceeded data that indicates the measurement data that exceeds an error threshold of the system, error code data that indicates a type of an error that has occurred in the system, and health check data that indicates an inspection result of the system.

4. The information processing apparatus (10) according to any one of claims 1 to 3, further comprising:
a processing program storage unit (12c) that stores therein a plurality of processing programs that enables data processing to be performed on the device data, wherein
the receiving unit (13a) receives the device data together with the data type code,
the determination unit (13b) determines, as an output destination of the device data that is indicated by the tag information, a processing program that is to be performed on the received device data from among the plurality of the processing programs, and
the output unit (13c) performs data processing on the device data that is identified by the data type code by using the determined processing program.

5. The information processing apparatus (10) according to claim 4, wherein the determination unit (13b) performs data processing on the device data that is identified by the data type code by using the determined processing program.

6. The information processing apparatus (10) according to any one of claims 1 to 5, wherein the output unit (13c) converts the data format of the received device data to a data format for internal processing, and outputs the converted device data to the determined output destination.

7. The information processing apparatus (10) according to any one of claims 1 to 6, wherein the receiving unit (13a) receives, as the data format, the device data of at least one of a JavaScript Object Notation (JSON) format, a Comma-Separated Values (CSV) format, and an Application Programming Interface (API) integration format.

8. The information processing apparatus (10) according to any one of claims 1 to 7, wherein the receiving unit (13a) receives the device setting information that is input by a user via a user terminal, and stores the device setting information in the device setting information storage unit (12a).

9. The information processing apparatus (10) according to claim 8, wherein
when the user changes association of the tag information via an input screen that is displayed on the user terminal, the receiving unit (13a) updates the device setting information that is stored in the device setting information storage unit (12a), and
the determination unit (13b) refers to the tag information that is indicated by the updated device setting information, and determines an output destination of the device data in accordance with the data format.

10. The information processing apparatus (10) according to any one of claims 1 to 9, wherein the device (20) is a plant device that is related to control of a plant, and at least one of a control device, a communication device, and a measurement device.

11. An information processing method that is implemented by a computer (10), the information processing method comprising:
receiving device data that is transmitted by a device (20) that is included in a system;
determining an output destination of the device data in accordance with a data format based on tag information that is set in association with the device (20) and that is included in device setting information; and
outputting the device data to the determined output destination based on a data type code that indicates the data format and that is included in the device setting information.

12. An information processing program that causes a computer (10) to execute a process, the process comprising:
receiving device data that is transmitted by a device (20) that is included in a system;
determining an output destination of the device data in accordance with a data format based on tag information that is set in association with the device (20) and that is included in device setting information; and
outputting the device data to the determined output destination based on a data type code that indicates the data format and that is included in the device setting information.
